# DEMANDE DE BREVET EUROPEEN

(11) **EP 3 163 208 A1**
(43) Date de publication de la demande: **03.05.2017**
(21) Numéro de dépôt: 16306416.5
(22) Date de dépôt: 28.10.2016
(51) Int. Cl.: F24H 1/20, F24D 3/08, F24D 3/10, F24D 3/18, F24D 19/10, F28D 7/02, F28D 20/00

(54) **SYSTEME DE CHAUFFAGE ET DISPOSITIF DE PRODUCTION D'EAU CHAUDE SANITAIRE ET DE CHAUFFAGE INCORPORANT LEDIT SYSTEME DE CHAUFFAGE**

(30) Priorité: 29.10.2015 FR 1560340
(71) Demandeur: Ivars, Paul, 40990 Saint Paul les Dax (FR)
(72) Inventeur: Ivars, Paul, 40990 Saint Paul les Dax (FR)
(74) Mandataire: Fantin, Laurent

(57) **Abrégé**

L'invention a pour objet un système de chauffage comprenant :
- un échangeur (34) coaxial qui comporte un conduit interne (40) positionné à l'intérieur d'un conduit externe (42),
- un bol (54) qui comporte une entrée (54E) reliée à la sortie (42S) du conduit externe (42) et une sortie (54S) positionnée à une hauteur plus élevée que l'entrée (42E) du conduit externe (42),
- une résistance d'appoint (56) disposée à l'intérieur du bol (54),
- une sonde de température (72) positionnée en sortie du conduit externe (42) ou dans le bol (54),
- un conduit bypass (74) qui relie la sortie (54S) du bol (54) et l'entrée (42E) du conduit externe (42).

## Description

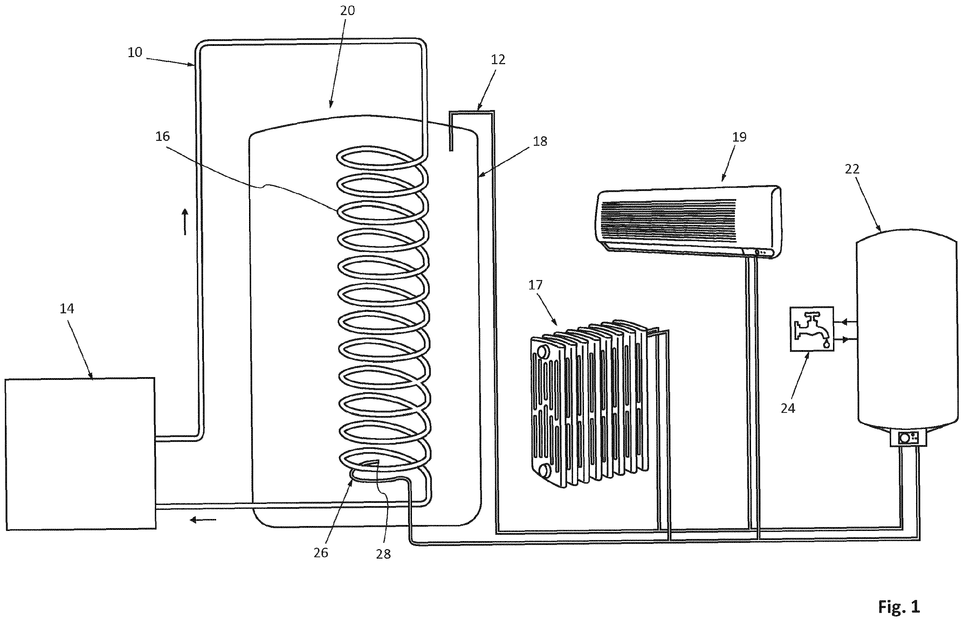

La présente invention se rapporte à un système de chauffage ainsi qu'à un dispositif de production d'eau chaude sanitaire et de chauffage incorporant ledit système de chauffage. Pour la suite de la description, un système de chauffage ou un dispositif de chauffage s'entend d'un appareil qui permet de chauffer l'intérieur d'une construction ou qui permet de chauffer et de climatiser/rafraichir l'intérieur d'une construction lorsqu'il est réversible. Comme illustré en figure 1, une installation de production d'eau chaude et de climatisation selon l'art antérieur comprend généralement un premier circuit 10 dans lequel circule un premier fluide caloporteur et un second circuit 12 dans lequel circule un second fluide caloporteur.

Le premier circuit 10 comprend des moyens 14 de refroidissement ou de chauffage du premier fluide selon l'utilisation du dispositif de climatisation et un serpentin 16.

Le second circuit 12 comprend au moins un radiateur 17, un ventilo-convecteur 19 ou un plancher chauffant/rafraîchissant, ainsi qu'un réservoir 18 dans lequel le serpentin 16 du premier circuit 10 est disposé.

Le serpentin 16 et le réservoir 18 forment un échangeur 20 au niveau duquel un transfert thermique est réalisé entre le premier fluide caloporteur et le second fluide caloporteur.

Pour améliorer les échanges thermiques entre les deux fluides caloporteurs, le second fluide caloporteur est injecté dans le réservoir 18 via une arrivée sous la forme d'une portion d'hélice afin d'animer le second fluide caloporteur d'un mouvement hélicoïdal ou tourbillonnant.

Cette solution, de conception simple, permet d'améliorer les échanges thermiques entre les deux fluides caloporteurs et d'obtenir un coefficient de performance pour l'installation de climatisation compatible avec les normes en vigueur.

Avantageusement, selon une première variante visible sur la figure 1, une partie du second circuit 12 est positionnée à l'intérieur d'un ballon d'eau chaude 22, ou chauffe-eau, pour produire de l'eau chaude destinée à alimenter un circuit d'eau chaude sanitaire 24.

Selon cette première variante, l'échangeur 20 et le chauffe-eau 22 sont deux éléments distincts et sont donc relativement encombrants du fait qu'ils sont distincts.

Pour limiter cet encombrement, le brevet FR-2.927.153 propose une solution dans laquelle un échangeur pour le chauffage est inséré dans la partie inférieure d'un ballon d'eau chaude. Cette solution permet de réduire l'encombrement.

La présente invention vise à améliorer la compacité et les performances énergétiques des dispositifs de l'art antérieur.

A cet effet, l'invention a pour objet un système de chauffage comprenant :
- un échangeur coaxial qui comporte un conduit interne positionné à l'intérieur d'un conduit externe,
- un bol qui comporte une entrée reliée à la sortie du conduit externe,
- une résistance d'appoint disposée à l'intérieur du bol,
- une sonde de température positionnée en sortie du conduit externe ou dans le bol,
caractérisé en ce qu'il comprend un conduit bypass qui relie la sortie du bol et l'entrée du conduit externe et en ce que la sortie du bol est positionnée à une hauteur plus élevée que l'entrée du conduit externe.

De préférence, le conduit bypass a un diamètre inférieur à la moitié du diamètre du conduit sortant du bol. Selon un mode de réalisation, le conduit bypass a un diamètre compris entre 5 et 8 mm.

L'invention a également pour objet un dispositif de production d'eau chaude sanitaire et de chauffage comprenant un système de chauffage selon l'une des caractéristiques précédentes et un réservoir contenant de l'eau destinée à être chauffée. Avantageusement, l'échangeur est enroulé autour du réservoir.

De préférence, le dispositif de production d'eau chaude sanitaire et de chauffage comprend une vanne positionnée en sortie du bol et un serpentin positionné dans le réservoir, dont une première extrémité est reliée à la vanne et dont une seconde extrémité est reliée à l'entrée du conduit externe, la vanne étant configurée pour occuper une première position dans laquelle la sortie du bol est reliée à une boucle de chauffage et une seconde position dans laquelle la sortie du bol est reliée au serpentin.

D'autres caractéristiques et avantages ressortiront de la description qui va suivre de l'invention, description donnée à titre d'exemple uniquement, en regard des dessins annexés sur lesquels :
- La figure 1 est une représentation schématique d'un dispositif de production d'eau chaude et de chauffage qui illustre un mode de réalisation de l'invention,
- La figure 2 est une représentation schématique d'un système de chauffage qui illustre l'invention,
- La figure 3 est une représentation schématique de l'échangeur visible sur la figure 2 incorporé dans un dispositif de production d'eau chaude sanitaire et de chauffage.

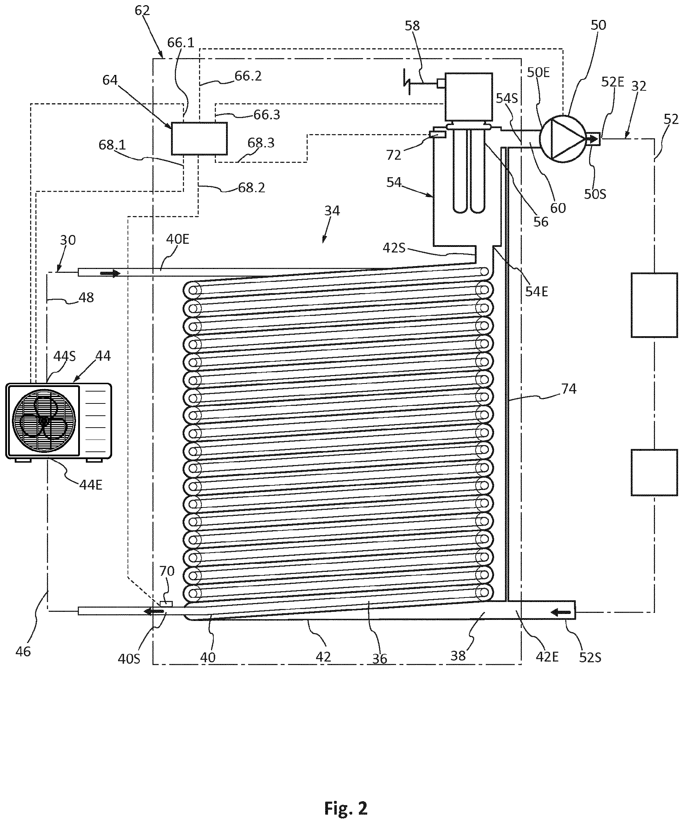

Sur la figure 2, on a représenté une installation de chauffage qui comprend un premier circuit 30 et un second circuit 32 ainsi qu'un échangeur 34 assurant un transfert thermique entre un premier fluide caloporteur 36 circulant dans le premier circuit 30 et un second fluide caloporteur 38 circulant dans le second circuit 32.

Selon une caractéristique de l'invention, l'échangeur 34 est coaxial. Ainsi, l'échangeur 34 comprend un conduit interne 40 qui correspond à une portion du premier circuit 30 et qui est placée à l'intérieur d'un conduit externe 42 qui correspond à une portion du second circuit 32. Selon cette configuration, le premier fluide 36 circule dans le conduit interne 40 et le second fluide 38 circule entre le conduit interne 40 et le conduit externe 42.

Le conduit interne 40 est en un matériau qui favorise les échanges thermiques entre les premier et second fluides. Selon un mode de réalisation, le conduit interne 40 est en alliage de cuivre.

A titre indicatif uniquement et de manière non limitative, le conduit interne 40 a un diamètre de l'ordre de 12mm et le conduit externe 42 a un diamètre de l'ordre de 26 mm. Dans la présente demande, le diamètre d'un conduit correspond au diamètre intérieur du conduit.

La longueur de l'échangeur 34 coaxial qui correspond à la longueur du conduit interne 40 placé à l'intérieur du conduit externe 42 varie en fonction de la puissance de chauffage souhaitée. De préférence, la longueur de l'échangeur 34 coaxial est supérieure à 10 m.

A titre indicatif uniquement et de manière non limitative, l'échangeur 34 coaxial a une longueur de l'ordre de 18 m pour une puissance de 10 kW.

Le conduit interne 40 comprend une entrée 40E et une sortie 40S et le conduit externe 42 comprend une entrée 42E et une sortie 42S.

Dans l'échangeur 34, les premier et second fluides circulent à contrecourant.

A cet effet, l'entrée 40E et la sortie 42S sont positionnées en partie supérieure de l'échangeur 34 alors que la sortie 40S et l'entrée 42E sont positionnées en partie inférieure.

Le premier circuit 30 fonctionne à la manière d'un cycle de Carnot.

Ainsi, en plus du conduit interne 40 de l'échangeur 34, le premier circuit 30 comprend un groupe extérieur 44 positionné à l'extérieur d'une construction et qui comporte un condenseur, un compresseur et un échangeur qui assure un transfert thermique entre le premier fluide circulant dans le premier circuit 30 et l'air environnant à l'extérieur de la construction.

Le groupe extérieur 44 comprend une entrée 44E reliée par une canalisation 46 à la sortie 40S du conduit interne 40 de l'échangeur 34 et une sortie 44S reliée par une canalisation 48 à l'entrée 40E du conduit interne 40 de l'échangeur 34.

Avantageusement, le groupe extérieur 44 est réversible. Selon un premier mode de fonctionnement, le premier fluide 36 circulant dans le premier circuit 30 chauffe le second fluide 38 circulant dans le second circuit 32 et selon un second mode de fonctionnement, le premier fluide 36 refroidit le second fluide 38. Le premier mode de fonctionnement, correspond au mode chauffage et le second mode de fonctionnement au mode climatisation ou rafraichissement.

En mode chauffage, le premier fluide 36 est à l'état gazeux à l'entrée 40E du conduit interne 40 et à l'état liquide à la sortie 40S.

Le groupe extérieur 44 comprend des capteurs et une platine de commande pour contrôler entre autre les caractéristiques (température, débit, pression,...) du premier fluide 36 à la sortie 44S du groupe extérieur 44.

Pour donner un exemple, le premier fluide 36 est un fluide frigorigène, comme par exemple un fluide référencé R410A. Le second fluide 38 est de l'eau.

En plus du conduit externe 42 de l'échangeur 34, le second circuit 32 comprend un circulateur 50 permettant de générer un flux dans le second circuit 32 ainsi qu'au moins une boucle de chauffage 52 disposé à l'intérieur d'une construction et qui comprend au moins un radiateur, au moins un ventilo-convecteur, au moins un plancher chauffant/rafraîchissant et/ou tout autre élément assurant un transfert thermique entre le second fluide 38 et l'air environnant.

Le circulateur 50 comprend une entrée 50E et une sortie 50S et la boucle de chauffage 52 comprend une entrée 52E et une sortie 52S.

Selon une configuration, la sortie 50S du circulateur 50 est reliée à l'entrée 52E de la boucle de chauffage 52 et la sortie 52S de la bouche de chauffage 52 est reliée à l'entrée 42E du conduit externe 42.

Selon une caractéristique de l'invention, l'échangeur 34 est associé à un bol 54 qui comprend une résistance d'appoint 56, une entrée 54E reliée à la sortie 42S du conduit externe 42 et une sortie 54S qui est positionnée à une hauteur plus élevée que l'entrée 42E du conduit externe 42.

Selon une configuration, l'entrée 54E du bol est positionnée en partie inférieure du bol 54 et sa sortie 54S est positionnée en partie supérieure du bol 54.

La résistance d'appoint 56 permet de chauffer le second fluide 38 si nécessaire, par exemple si l'air à l'extérieur de la construction est trop froid. Cette résistance d'appoint 56 est reliée à une alimentation électrique 58.

De préférence, le bol 54 a une contenance de l'ordre de 3 à 6I.

Selon une configuration, la sortie 54S du bol 54 est reliée par un conduit 60 à l'entrée 50E du circulateur 50.

L'échangeur 34 et le bol 54 forme un système de chauffage 62 qui comprend une première entrée qui correspond à l'entrée 40E du conduit interne 40 et une première sortie qui correspond à la sortie 40S du conduit interne 40 et une deuxième entrée qui correspond à l'entrée 42E du conduit externe 42 (retour du chauffage) et une deuxième sortie qui correspond à la sortie 54S du bol 54 généralement reliée au circulateur 50.

Le système de chauffage 62 comprend une commande 64 qui comporte des sorties 66.1, 66.2, 66.3 pour contrôler respectivement le groupe extérieur 44, le circulateur 50 et la résistance d'appoint 56 ainsi que des entrées 68.1, 68.2, 68.3 provenant notamment du groupe extérieur 44, d'une première sonde de température 70 positionnée au niveau de la sortie 40S du conduit interne 40 et une deuxième sonde de température 72 positionnée en sortie 42S du conduit externe 42 ou dans le bol 54. De préférence, la deuxième sonde de température 72 est positionnée en partie supérieure du bol 54, sensiblement à la même hauteur que la sortie 54S du bol 54.

Dans certaines circonstances, il est nécessaire de faire fonctionner le groupe extérieur 44 et donc d'assurer la circulation du premier fluide 36 dans le premier circuit 30 alors que le circulateur 50 ne fonctionne pas, par exemple lorsque la température de consigne est atteinte dans la construction et que le circulateur 50 est arrêté.

Selon une caractéristique importante de l'invention, le système de chauffage 62 comprend un conduit 74 dit bypass qui relie la sortie 54S du bol 54 et l'entrée 42E du conduit externe 42 pour assurer un fonctionnement optimal du groupe extérieur 44 et la bonne irrigation de la deuxième sonde de température 72. Ainsi, lorsque le circulateur 50 ne fonctionne pas, on obtient une circulation du second fluide 38 à l'intérieur du conduit externe 42 et dans le conduit 74 bypass dans le sens allant de la sortie 54S du bol 54 à l'entrée 42^{E} du conduit externe 42. Ainsi, le second fluide 38 se réchauffe dans le conduit externe 42 et monte en direction du bol 54 alors que le fluide plus froid dans le bol 54 redescend via le conduit bypass 74 vers l'entrée 42E du conduit externe 42.

Avantageusement, le conduit bypass 74 s'étend perpendiculairement par rapport au conduit 60 reliant la sortie 54S du bol et l'entrée 50E du circulateur 50. Le conduit bypass 74 s'étend perpendiculairement par rapport au conduit relié à l'entrée 42E du conduit externe 42.

De préférence, le conduit bypass 74 a un diamètre inférieur à la moitié du diamètre du conduit 60. Selon un mode de réalisation, le conduit bypass 74 a un diamètre compris entre 5 et 8 mm.

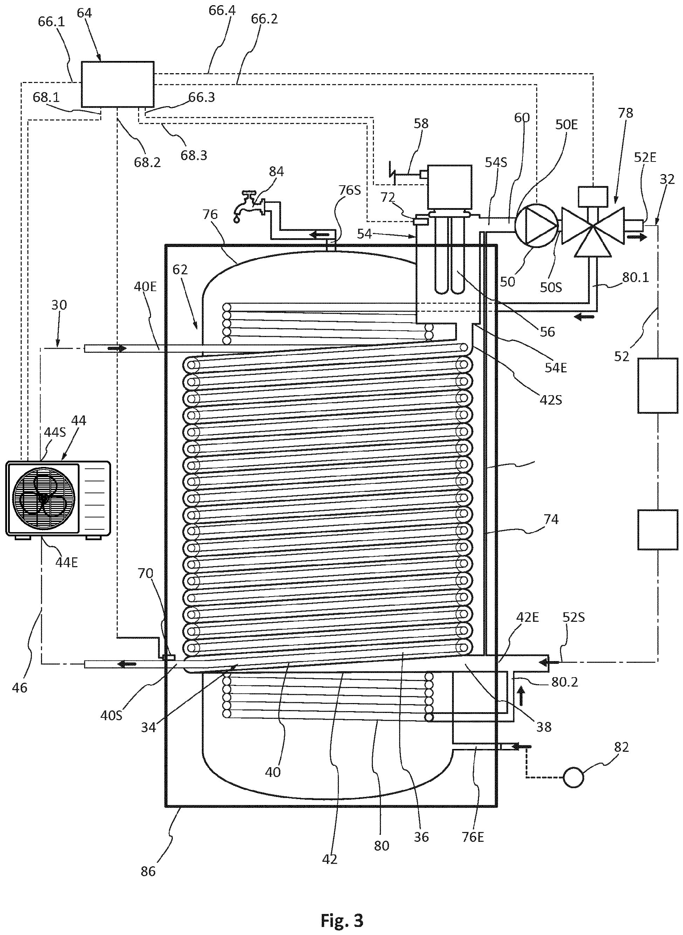

Sur la figure 3, on a représenté un dispositif de production d'eau chaude sanitaire et de chauffage. Les éléments communs des figures 2 et 3 sont référencés de la même manière.

Le dispositif de production d'eau chaude sanitaire et de chauffage comprend un système de chauffage 62 comme décrit précédemment, un réservoir 76 contenant de l'eau destinée à être chauffée, une vanne 78 positionnée à la sortie du bol 54 (de préférence après le circulateur 50) et un serpentin 80 dont une première extrémité 80.1 est reliée à la vanne 78 et dont une seconde extrémité 80.2 est reliée à l'entrée 42E du conduit externe 42.

La vanne 78 est pilotée par la commande 64 qui comprend une sortie 66.4 à cet effet.

Cette vanne 78 est configurée pour occuper une première position dans laquelle elle relie la sortie 54S du bol 54 à la boucle de chauffage 52 et une deuxième position dans laquelle elle relie la sortie 54S du bol 54 au serpentin 80. De préférence, la vanne 78 peut occuper des positions intermédiaires dans lesquelles la vanne 78 laisse passer un premier débit plus ou moins important vers la boucle de chauffage 52 et un second débit plus ou moins important vers le serpentin 80. Selon un mode de réalisation, la vanne 78 est une vanne trois voies.

Le réservoir 76 comprend un corps cylindrique avec à chaque extrémité (supérieure et inférieure) un dôme.

Le serpentin 80 se présente sous la forme d'un enroulement hélicoïdal qui est coaxial au corps cylindrique du réservoir 76.

Le réservoir 76 a une contenance qui varie en fonction des besoins en eau chaude. De préférence, quelles que soient leurs contenances, les réservoirs 76 de différents dispositifs ont le même diamètre, seules leurs hauteurs varient.

Pour donner un ordre de grandeurs et de manière non limitative, le réservoir 76 a un diamètre de l'ordre de 500 mm et le serpentin a une longueur de l'ordre de 17 m et un diamètre d'enroulement de l'ordre de 400 mm.

Le réservoir 76 comprend une entrée 76E reliée à une alimentation en eau 82 (généralement froide) et une sortie 76S reliée à au moins une sortie d'eau chaude 84. De préférence, l'entrée 76E du réservoir 76 est positionnée en partie inférieure du réservoir 76 alors que la sortie 76S est positionnée en partie supérieure.

Selon une caractéristique de l'invention, l'échangeur 34 est enroulé autour du réservoir 76 de manière à obtenir un ensemble très compact. L'échangeur 34 est en contact avec la paroi extérieure du réservoir 76.

Avantageusement, le réservoir 76, l'échangeur 34 et le bol 54 sont positionnés dans une coque 86 isolée thermiquement pour limiter les déperditions thermiques.

Le dispositif de production d'eau chaude sanitaire et de chauffage est relativement compact et contient dans un meuble parallélépipédique avec une section horizontale de 60 cm x 60 cm.

Ce meuble comprend à l'intérieur l'échangeur 34 autour du réservoir 76, le bol 54, le conduit bypass 74, la commande 64. Il comprend également des raccords pour le relier à un groupe extérieur 44, à au moins une boucle de chauffage 52, à une alimentation en eau 82 et à au moins une sortie d'eau chaude 84. A cet effet, le meuble comprend une première entrée 40E et d'une première sortie 40S pour le relier au groupe extérieur 44, une deuxième entrée 42E et une deuxième sortie 54S pour le relier à au moins une boucle de chauffage 52, une troisième entrée 76E et une troisième sortie 76S pour le relier respectivement à une alimentation en eau 82 et à au moins une sortie d'eau chaude 84.

En variante, le circulateur 50 et la vanne 78 sont placés dans le meuble.

## Revendications

1. Système de chauffage comprenant :
- un échangeur (34) coaxial qui comporte un conduit interne (40) positionné à l'intérieur d'un conduit externe (42), le conduit interne (40) comprenant une entrée (40E) et une sortie (40S) configurées pour être reliées à un groupe extérieur (44), le conduit externe (42) comprenant une entrée (42E) et une sortie (42S),
- un bol (54) qui comporte une entrée (54E) reliée à la sortie (42S) du conduit externe (42) et une sortie (54S), la sortie (54S) du bol et l'entrée (42E) du conduit externe (42) étant configurées pour être reliées à au moins une boucle de chauffage (52),
- une résistance d'appoint (56) disposée à l'intérieur du bol (54),
- une sonde de température (72) positionnée en sortie du conduit externe (42) ou dans le bol (54),
**caractérisé en ce qu'**il comprend un conduit bypass (74) qui relie la sortie (54S) du bol (54) et l'entrée (42E) du conduit externe (42) et **en ce que** la sortie (54S) du bol (54) est positionnée à une hauteur plus élevée que l'entrée (42E) du conduit externe (42).

2. Système de chauffage selon la revendication 1, **caractérisé en ce que** le conduit bypass (74) a un diamètre inférieur à la moitié du diamètre du conduit (60) sortant du bol (54).

3. Système de chauffage selon la revendication 2, **caractérisé en ce que** le conduit bypass (74) a un diamètre compris entre 5 et 8 mm.

4. Système de chauffage selon l'une des revendications précédentes, **caractérisé en ce que** l'entrée (54E) et la sortie (54S) du bol (54) sont positionnées respectivement en partie inférieure et en partie supérieure du bol (54) et **en ce que** la sonde de température (72) est positionnée en partie supérieure du bol.

5. Système de chauffage selon l'une des revendications précédentes, **caractérisé en ce que** l'entrée (40E) du conduit interne (40) et la sortie (42S) du conduit externe (42) sont positionnées en partie supérieure de l'échangeur (34) et **en ce que** la sortie (40S) du conduit interne (40) et l'entrée (42E) du conduit externe (42) sont positionnées en partie inférieure de l'échangeur (34).

6. Système de chauffage selon l'une des revendications précédentes, **caractérisé en ce qu'**il comprend un circulateur (50) avec une entrée (50E) reliée à la sortie (54S) du bol, le conduit bypass (74) étant relié à un conduit (60) reliant la sortie (54S) du bol (54) et l'entrée (50E) du circulateur (50).

7. Dispositif de production d'eau chaude sanitaire et de chauffage comprenant un système de chauffage (62) selon l'une des revendications précédentes et un réservoir (76) contenant de l'eau destinée à être chauffée.

8. Dispositif de production d'eau chaude sanitaire et de chauffage selon la revendication précédente, **caractérisé en ce que** l'échangeur (34) est enroulé autour du réservoir (76).

9. Dispositif de production d'eau chaude sanitaire et de chauffage selon l'une des revendications 7 à 8, **caractérisé en ce qu'**il comprend une vanne (78) positionnée en sortie du bol (54) et un serpentin (80) positionné dans le réservoir (76), dont une première extrémité (80.1) est reliée à la vanne (78) et dont une seconde extrémité (80.2) est reliée à l'entrée (42E) du conduit externe (42), la vanne (78) étant configurée pour occuper une première position dans laquelle la sortie (54S) du bol est reliée à une boucle de chauffage (52) et une deuxième position dans laquelle la sortie (54S) du bol est reliée au serpentin (80).

10. Dispositif de production d'eau chaude sanitaire selon la revendication précédente, **caractérisé en ce qu'**il comprend un circulateur (50) positionné entre la sortie (54S) du bol (54) et la vanne (78).
